# EUROPEAN PATENT SPECIFICATION

(11) **EP 0 920 778 B1**
(45) Date of publication and mention of the grant of the patent: **16.11.2011**
(21) Application number: 98912646.1
(22) Date of filing: 20.04.1998
(51) Int. Cl.: H04N 7/173, H04N 5/445

(54) **TRANSMISSION AND RECEPTION OF TELEVISION PROGRAMS**
ÜBERTRAGUNG UND EMPFANG VON FERNSEHPROGRAMMEN
TRANSMISSION ET RECEPTION DE PROGRAMMES TELEVISES

(30) Priority: 21.05.1997 EP 97201510
(43) Date of publication of application: 09.06.1999
(73) Proprietor: Koninklijke Philips Electronics N.V., 5621 BA Eindhoven (NL)
(72) Inventor: TEN KATE, Warner, Rudolph, Theophile, NL-5656 AA Eindhoven (NL); MATTHEWS, Peter, George, NL-5656 AA Eindhoven (NL); SCHOENMAKERS, Arnoldus, Fransiscus, NL-5656 AA Eindhoven (NL); CHARMAN, Helen, Louis, NL-5656 AA Eindhoven (NL); DOBBELAAR, Astrid, NL-5656 AA Eindhoven (NL)
(74) Representative: Schmitz, Herman Jan Renier
(86) International application number: PCT/IB1998/000580
(87) International publication number: WO 1998/053611

(56) References cited:
- EP-A2- 0 849 946
- WO-A-96/41478
- WO-A1-98//17064
- US-A- 4 488 179

## Description

### FIELD OF THE INVENTION

The invention relates to a method of transmitting and receiving television programs. The transmission includes additional information items related to said television programs and trigger data for selectively invoking said information items.

### BACKGROUND OF THE INVENTION

A known method as defined in the opening paragraph is disclosed in "Intercast Brings the Web to TV", PC Magazine, January 21, 1997, pp. 203-204. This article describes a method of transmitting Web pages along with a standard television signal. The Web pages provide additional information on what is being broadcast at a particular time. They are downloaded and cached in a receiver's memory. The transmission also includes trigger data (hereinafter also denoted as "triggers") which cause cached pages to be pulled up for display. Said triggers allow the broadcaster to download the pages well in advance and display them at the right moment in the television program. For example, during a commercial for a product, a Web page is pulled up that provides more product information such as available sizes or colors.

The television program, a directory of Web pages, and a selected Web page are displayed in distinct windows of the receiver's display screen. If the television program were displayed in the full screen mode, the user would remain unaware of the Web page that is actually being pulled up. Furthermore, the window showing the directory of Web pages is created by the receiver and necessarily lists only the pages which have already been received.

International Patent Application WO-A-9641478 discloses a television receiver provided with electronic program guide features. The receiver has a flip mode and a browse mode. In a flip mode, the receiver displays concurrently programming information for the channel currently tuned, whenever the user changes the program channel. In a browse mode, the user can scan through the programming information for any channel while continuing to view a previously selected channel. The programming information is transmitted in advance and invoked by predetermined display control commands such as cursor keys.

### OBJECT AND SUMMARY OF THE INVENTION

It is an object of the invention to further improve the prior-art system. To this end, the invention provide methods and arrangements for transmitting and receiving television programs as defined in the independent claims. The invention also provides a television signal and a storage medium on which such a signal is stored. Advantageous embodiments of the invention are defined in the subclaims.

The invention allows triggers in the form of pictograms or audible beeps to appear on screen during the program. The triggers inform the public that additional information about a current event in the program is accessible, even if the television program is being viewed in the full screen mode. The user may or may not invoke the relevant Web page at his own discretion.

It is noted that it is proposed in non-prepublished International Patent Application WO 98/17064 to transmit data representative of an icon and an associated internet address in the vertical blanking interval of a television signal. In this proposal, the web-pages are retrieved through an Internet access terminal.

In non-prepublished European Patent Application EP-A-0 849 946, it is proposed to automatically recognize video content such as http:/www.ooo.ooo, and display a button in response thereto. If the button is pressed, the corresponding Internet site can be accessed via a response server.

An embodiment of the method further comprises the step of transmitting a table of contents identifying the trigger data transmitted during the program. It is thereby achieved that the viewer is informed in advance about the triggers he can expect during the program and to which additional information he will be alerted, even if the information items themselves have not yet been transmitted and received. The table of contents is accessible during the full length of the program. After a trigger has been passed, the viewer may (re)inspect the information still in the context of the television program. Access at a later stage may be along a different path than access during the alerting period in which the trigger is displayed. The table of contents is preferably repetitively transmitted throughout the program in order that it is also available for people who started to watch the program later.

Advantageously, the availability of the table of contents is also signalled to the user by the transmission of an appropriate trigger.

### BRIEF DESCRIPTION OF THE DRAWINGS

Fig.1 shows schematically a transmission system comprising a transmitter and a receiver in accordance with the invention.
Fig.2 shows the transmission format of additional information transmitted by the transmitter shown in Fig.1.
Fig.3 shows the transmission format of trigger data transmitted by the transmitter shown in Fig.1.
Fig.4 shows the transmission format of a table of contents transmitted by the transmitter shown in Fig.1.
Fig.5, composed of Figs. 5A and 5B, shows an example of data transmitted along with the television signal during a television program broadcast by the transmitter shown in Fig.1.
Fig.6 shows a flow chart of a program stored in and executed by a microprocessor in the receiver shown in Fig.1.
Fig.7 shows examples of a television screen illustrating the features of the invention.

### DESCRIPTION OF EMBODIMENTS

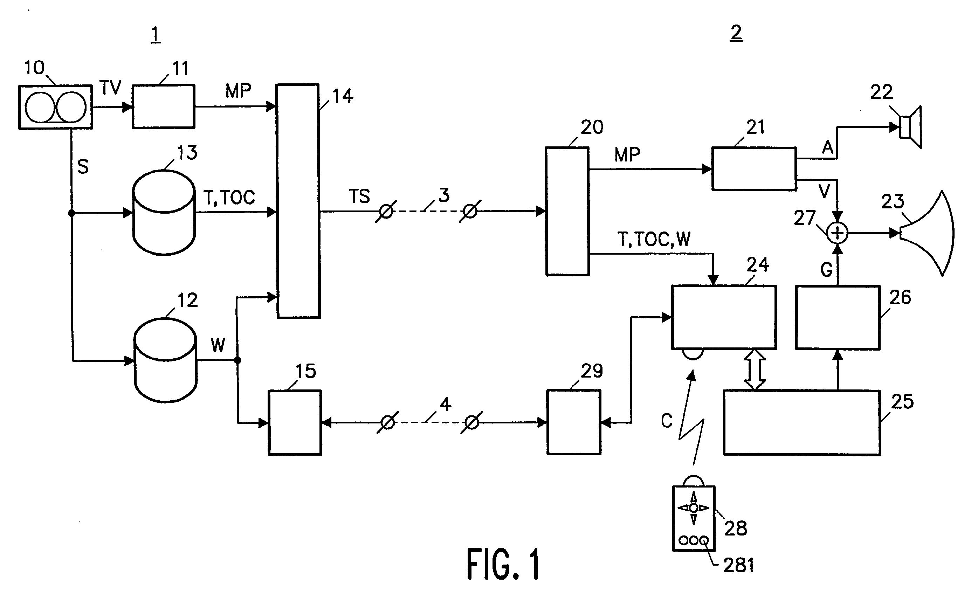

Fig.1 shows schematically a transmission system in accordance with the invention. The system comprises a transmitter **1** and at least one receiver **2** connected together through a channel **3.** The channel **3** may be a broadcast channel, for example, a satellite connection, a terrestrial broadcast network or a cable. As the advantageous effects of the invention are also achieved when playing back a prerecorded program from a storage medium, the channel **3** may also be such a storage medium, for example, a magnetic tape or an optical disc on which the output signal of the transmitter has been recorded. Optionally, a second channel **4** (return channel or bi-directional channel) between the transmitter and the receiver is provided in the form of the Public Switched Telephone Network PSTN or Integrated Service Digital Network ISDN.

The transmitter **1** comprises a television signal source **10** which is shown in the Figure as a studio tape recorder playing back a prerecorded television program. The television signal TV from the source **10** is encoded by an MPEG encoder **11** into a digital MPEG television signal MP. The transmitter further comprises a first storage medium **12** and a second storage medium **13.** The first storage medium **12** stores a number of Web pages W with additional information related to the television program. The second storage medium **13** stores trigger data items T for invoking said Web pages and a table of contents TOC. In practice, both storage media **12** and **13** will be sections of a single hard disk unit. The triggers T and selected ones of the Web pages W are read from the respective storage media in synchronism with the television program under the control of synchronization signals S delivered by the signal source **10.** They are multiplexed with the digital television signal MP by means of a multiplexer **14** into an MPEG Transport Stream TS and transmitted to the receiver **2.** Optionally, the transmitter also comprises an Internet access terminal **15** which enables receivers to access the Web pages W stored in the first storage medium **12** through the Public Switched Telephone Network **4.**

The receiver **2** comprises a demultiplexer **20** which separates the encoded television signal MP from the triggers T, table of contents TOC, and Web pages W. The television signal MP is applied to an MPEG decoder **21** which decodes the audio component A for reproduction by a speaker **22** and the video component V for full-screen display on a display screen **23.** The triggers T, table of contents TOC, and Web pages W are applied to a microprocessor **24** which is arranged to store these types of data in a memory **25** for subsequent processing. The microprocessor is arranged to store selected information in a predetermined display section of the memory **25.** The data in said display section is converted by a character generator **26** into a displayable graphics signal G which is applied to a combiner stage **27** for display on the screen **25,** solely or in combination with the video signal V. The microprocessor **24** is further connected to a (remote) control unit **28** and, optionally, a modem **29** for accessing the Internet.

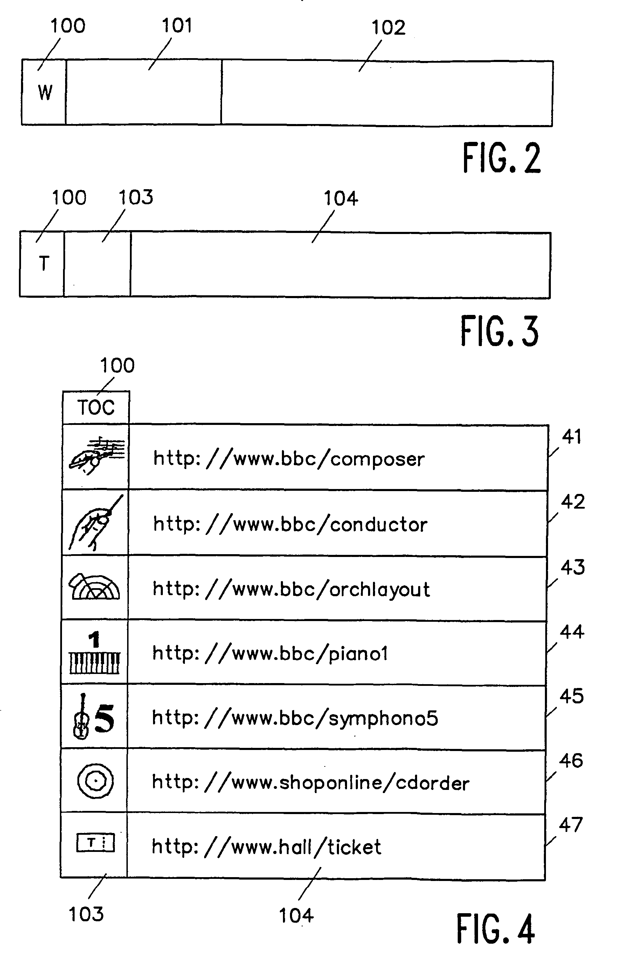

Fig.2 shows the transmission format of Web pages W transmitted by the transmitter 1. A type field **100** identifies the type of information which is the character "W" for Web pages in this example. An address field **101** defines an address (here a file name) by which the pages are retrieved from the broadcast signal and stored in the receiver's memory. Numeral **102** denotes the contents of the page made up in the popular HTML format (HyperText Mark-up Language).

Fig.3 shows the transmission format of the triggers T transmitted by the transmitter. For triggers, the type field **100** is the character "T". A display data field **103** defines (or refers to) a reproducible data signal such as a visual pictogram or an audible signal. The same field can also define how long the signal must be reproduced. A link field **104** defines the location where the Web page to which the trigger is linked can be found. The link field **104** has one of two formats. The format http://www.X/Y refers to Web page Y of content provider X on the Internet. The format dvb://X/Y refers to Web page Y which is transmitted along with the television signal transmitted by broadcast station X in accordance with this invention.

The operation of the system shown in Fig.1 will now be described with reference to an example. In this example, a classical concert is being broadcast. A plurality of Web pages with additional information related to the television program are transmitted during the broadcast for consultation by the user if he so wishes. Some of these pages are transmitted along with the television signal, others can only be accessed through the Internet. The following Web pages with additional information related to the concert are accessible in this example:
- information about the composer to whom the concert is dedicated,
- information about the conductor,
- information about each individual piece of music (Piano concert No.1 and Symphony No.5, respectively, in this example),
- the orchestral layout,
- an order form for purchasing a CD of the concert, and
- an order form for purchasing a ticket for a forthcoming concert.

The broadcaster informs the user about the availability of these Web pages by transmitting respective triggers at adequate points of time during the concert. Upon reception of a trigger, the receiver displays the pictogram or reproduces the audible signal which is defined in the trigger's display data field **103** (see Fig.3). The pictogram is displayed in the (full-screen) television image area. The user may then access the relevant Web pages by simply clicking the pictogram or pressing a dedicated button on the remote control unit. Three types of triggers can be identified:
- Static triggers relate to the television program as a whole.
- Dynamic triggers relate to a current event in the program.
- Living triggers are a combination of a static trigger and a dynamic link. The visualization of the trigger remains unchanged but the actual link field **104** adapts to the action in the program.

The triggers being transmitted and presented during the program are listed together in a table of contents. Fig.4 shows the transmission format of tables of contents. They are identified by the character "TOC" in their type field **100.** The type field is followed by a list of triggers, each comprising a display data field **103** and a link field **104.** In the TOC, the link field **104** may be empty, for example, if the relevant Web page has not yet been broadcast. Upon reception by the receiver, the TOC will be stored at a predetermined memory location, for example, under the reserved file name "toc". An address field similar to the address field **101** shown in Fig.2 can therefore be dispensed with.

In the example of the TOC shown in Fig.4, seven triggers **41-47** are listed which will be transmitted during the classical concert broadcast. Initially, i.e. at the beginning of the program when the TOC is transmitted prior to the transmission of any of the above-mentioned Web pages with program-related additional information, all of the respective link fields **104** refer to Web pages on the Internet. This allows the user to consult the relevant Web pages already at the beginning of the concert if he so wishes. However, as will be explained hereinafter, the TOC is regularly transmitted with updated link fields.

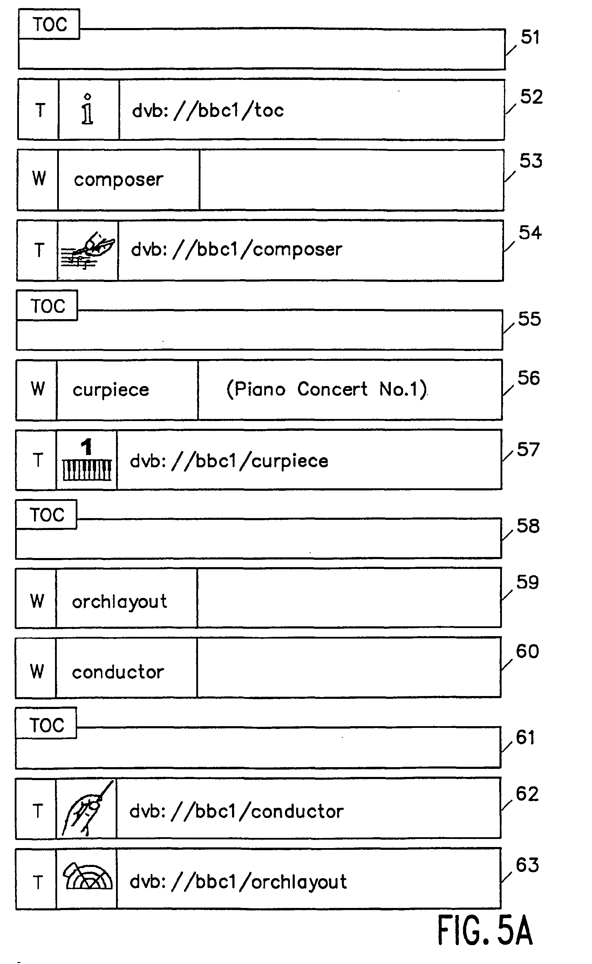

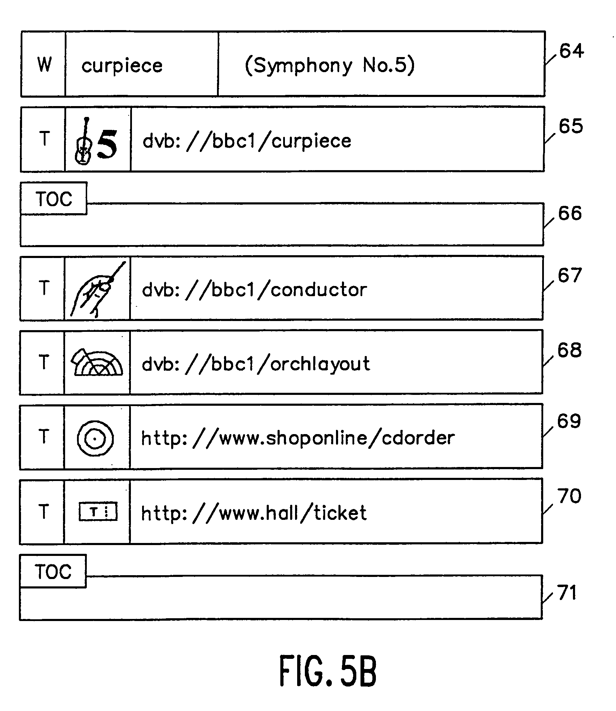

Fig.5 (which is composed of Figs. 5A and 5B) shows the actual data (tables of contents TOC, Web pages W, triggers T) that are transmitted along with the television signal during the classical concert broadcast. Numeral **51** denotes the first transmission of the table of contents. At this stage, all link fields in the TOC refer to Web pages on the Internet as shown in Fig.4. Numeral **52** denotes the transmission of a trigger T enabling the user to access the TOC which has just been received. The link field of this trigger is "toc" which is the reserved file name for the table of contents. The trigger **52** is an example of a static trigger. The relevant pictogram remains displayed during the whole program, for example, in an upper corner of the television image. Alternatively, the TOC can be accessed by pressing a dedicated information button (**281** in Fig.1) on the remote control unit.

Numeral **53** denotes the transmission, at the beginning of the program (e.g. during announcements), of a Web page with background information about the composer to whom the concert is dedicated. The page is stored in the receiver under the file name "composer". Then, a trigger **54** is transmitted which causes the embedded pictogram to be inserted into the television image for a defined period of time. The user may click the pictogram and cause the composer Web page to be read from the memory and displayed on the screen.

Numeral **55** denotes the transmission of an updated version of the table of contents. The updated TOC differs from the first version in that the link field of the composer trigger (**41** in Fig.4) is changed from an Internet link (http://www.bbc/composer) to a link to the broadcast page (dvb://bbc1/composer). Accordingly, if the user accesses the composer page via the TOC at a later stage, the receiver will acquire the page from the local memory rather than from the Internet, as was the case at the very beginning of the program.

When the first notes of the first piece of music (Piano Concert No.1) are being broadcast, the transmitter transmits a Web page **56** with background information about this piece of music, which is followed by the transmission of a trigger **57.** As long as the relevant pictogram is displayed, the viewer can consult the respective page by simply clicking the pictogram. As is shown in the Figure, the page is stored under the file name "curpiece". Subsequently, the table of contents is updated by transmitting a new TOC **58** in which the link field **104** of trigger **44** (see Fig.4) has been changed from http://www.bbc/pianol to dvb://bbc1/curpiece.

During the first piece of music, a Web page **59** showing a layout of the orchestra and a Web page **60** with background information about the conductor of the orchestra are transmitted and stored in the receiver. Their transmission is followed by an update **61** of the TOC in which the link field of layout trigger **43** (see Fig.4) has been changed from http://www.bbc/orchlayout to dvb://bbc1/orchlayout, and the link field of conductor trigger **42** (see Fig.4) has been changed from http://www.bbc/conductor to dvb://bbc1/conductor. The triggers T for invoking these Web pages by clicking the relevant pictogram are denoted **62** and **63** in the Figure. They are transmitted at appropriate moments during the program, i.e. during a close-up view of the conductor and a global view of the orchestra, respectively. Note that the other information items such as the composer page can be accessed at any time via the table of contents. To this end, the user clicks the TOC pictogram or presses the information button and selects a desired pictogram from the table of contents which is displayed in response thereto.

Reference numeral **64** denotes the transmission of a Web page with information about the second piece of music (Symphony No.5). Numeral **65** denotes a trigger for invoking this page which is transmitted when this piece is being played. In this example, the Symphony No.5 page replaces the Piano Concert No.1 page because both pages have the same file name "curpiece". This is not essential but is shown to illustrate the flexibility of the invention. Although the trigger associated with the Piano Concert No.1 will no longer be transmitted, the information remains accessible to the user via the Internet. To this end, the link field of trigger **44** in the table of contents (see Fig.4) is restored to its original value http://www.bbc/pianol in an updated version **66** of the TOC. While Symphony No.5 is being played, triggers **67** and **68** for invoking the conductor and orchestral layout pages are again transmitted during a close-up view of the conductor and a global view of the orchestra, respectively.

At the end of the program, announcements are made about the possibility to buy a CD of the concert and a ticket for the next concert in the concert hall. During these announcements, triggers **69** and **70** are transmitted. Clicking the corresponding pictogram causes the receiver to establish an Internet connection with a CD shop or the concert hall, respectively, allowing him to order the CD or ticket. Finally, a new TOC **71** is transmitted in which all link fields are given their initial value as shown in Fig.4. After the program has finished, the viewer is thus still kept informed about the program's additional information and he can still access the Web pages via the Internet.

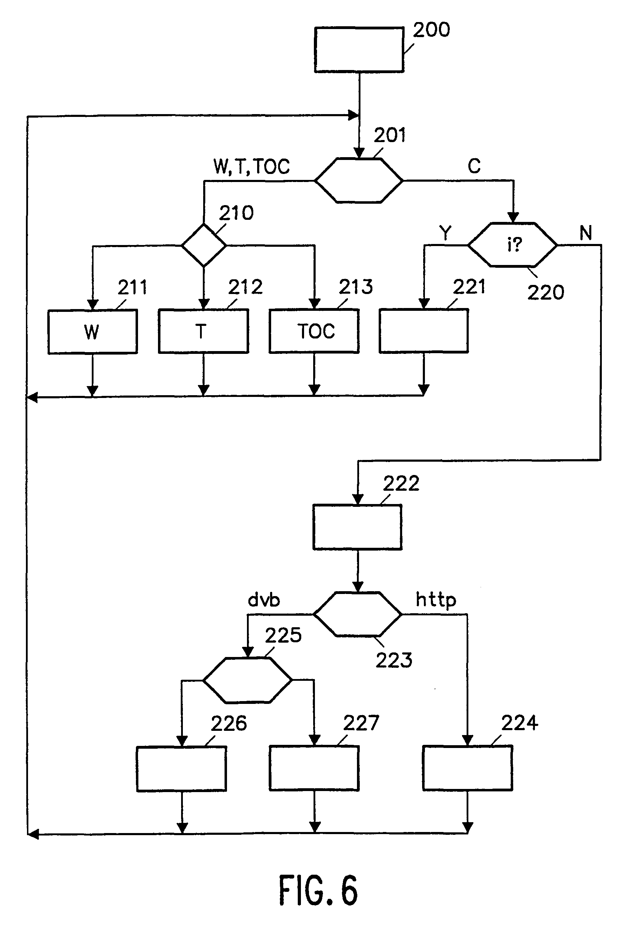

Although the receiver **2** (see Fig.1) has already been described functionally in the above example, its operation will now be described in more detail. The operation of the receiver is determined by a program which is stored in, and executed by, the microprocessor **24.** Fig.6 shows a flow chart illustrating this program. References in this description which are made to various circuit elements of the receiver refer to the schematic diagram shown in Fig.1. In the flow chart, numeral **200** denotes a reset operation which is carried out when the receiver is tuned to a television program. In a step **201,** the microprocessor awaits reception of a data item (W, T, TOC) from the multiplexer **20** or reception of a control command (C) from the remote control unit **28.** If a data item is received, the program proceeds with step **210.** If a control command is received, the program proceeds with step **220.**

In the step **210,** the microprocessor reads the type field of the received data item. If the type field is "W", the data item is a broadcast Web page. In a step **211,** said page is stored in the receiver's memory **25** under the file name which is included in the address field of the Web page. If the type field is "T", the data item is a trigger. In a step **212,** the microprocessor stores the pictogram embedded in the display data field in the display section of memory **25.** In response thereto, the character generator **26** displays the pictogram as an overlay over the television image. The link field of the trigger is also saved in memory. If the type field is "TOC", the data item is a table of contents. In a step **213,** said table is stored in memory **25** under the file name 'toc". After thus having processed a received data item, the program returns to the step **201** to await further events.

In the step **220,** the microprocessor investigates whether the received control command is a toggle command to switch the display of the table of contents on or off. The relevant command is issued by pressing a special i-button (**281** in Fig.1) of the remote control unit or pointing-and-clicking the i-pictogram in the upper right corner of the television screen. Then a step **221** is executed in which the table of contents is displayed or, if the TOC is already displayed, erased.

Other control commands are point-and-click operations for navigating through the information associated with the television program. In a step **222,** the link field associated with the pictogram being clicked is read. This applies to triggers that have just been received as well as triggers that are listed in the table of contents. In a step **223,** the microprocessor determines whether the link field is filled in and, if this is the case, whether it represents an Internet address (http://..) or a broadcast address (dvb://..). In the table of contents, link fields may initially be empty. In that case, the microprocessor generates an on-screen-display message informing the user that the selected information item will be transmitted and received later during the program. The user is thus informed about information still to come.

If the link field is an Internet address, a step **224** is carried out in which the microprocessor activates modem **29** for establishing an Internet connection with the relevant provider. If the receiver has no modem, the user may be informed that the desired information will possibly be transmitted and received later.

If the link field represents a broadcast address, the microprocessor checks in a step **225** whether a page with the associated file name is stored in the receiver's memory **25.** This will usually be the case, and the microprocessor will transfer the stored page to the display section in a step **226.** If the page is not locally available yet, a step **227** is performed in which the user is given an appropriate message that the page is being looked for in the received television signal. Optionally, the receiver may keep a copy of the initial version of the table of contents (see Fig.4) for offering the user an alternative location of the desired information. As an additional option, the transmitter may transmit for this purpose a special backup version of the table of contents in which all link fields refer to Internet Web pages only. Such an option is very useful for viewers who have tuned to the program at a later stage.

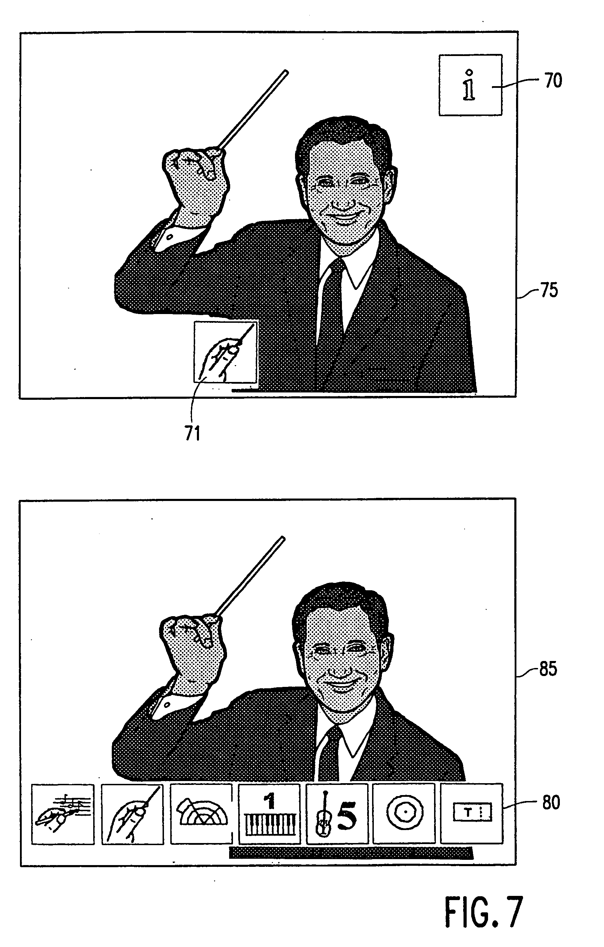

Fig.7 shows an example of television screens during the concert. In screen **75,** the conductor trigger has just been transmitted. The corresponding pictogram **71** is displayed, and the viewer can access more information about the conductor by clicking the pictogram. In the upper right corner, the i-pictogram **70** for accessing the table of contents is displayed. Screen **85** shows the result of pointing and clicking said i-pictogram. It causes the display data fields **80** of the triggers listed in the table of contents to be displayed.

In summary, a television transmitter transmits additional information in the form of Web pages along with the television signal. The transmission further includes triggers (71) for selectively invoking said Web pages in synchronism with the program. The triggers include (or refer to) a perceptible signal, e.g. a pictogram or an audible beep. In response to receiving a trigger, a receiver reproduces said perceptible signal without substantially disturbing the television screen. The user is thus timely alerted about additional information related to the television program when viewing it. Thus, he may or may not invoke the relevant Web page at his own discretion. To inform the public in advance of the triggers that will be broadcast and to provide easy access to the Web pages at an earlier or later stage, the transmission further includes a table of contents (80) identifying the triggers that are being transmitted during the program. The table of contents itself may be invoked by a trigger (70).

## Claims

1. A method of transmitting television programs (TV) to at least one receiver, including the steps of transmitting, along with a television signal representing a program, additional information pages (W) related to said television programs, and further transmitting, during a program, trigger data (T) comprising a link field (104) identifying a particular one of said additional information pages for selectively invoking said particular one of said additional information pages, **characterized in that** the trigger data further comprises, associated with the link field, a data field (103) including, or referring to, a corresponding reproducible signal for perceptible reproduction by the receiver so that, in response to a predetermined user-operable command acting on the reproducible signal, said information page is invokable.

2. A method as claimed in claim 1, wherein the reproducible signal is a displayable video sub-image.

3. A method as claimed in claim 1, wherein the reproducible signal is an audible sound signal.

4. A method as claimed in claim 1, further comprising the step of transmitting a table of contents (TOC) identifying the trigger data being transmitted during the program.

5. A method as claimed in claim 4, wherein the table of contents is repetitively transmitted throughout the television program.

6. A method as claimed in claim 4, including the step of transmitting trigger data for invoking said table of contents.

7. A method of receiving television programs, comprising the steps of receiving and storing additional information pages (W) related to said television programs and transmitted along with a television signal representing a program, and further receiving, during a program, trigger data (T) comprising a link field (104) identifying a particular one of said additional information pages for selectively invoking said particular one of said additional information pages, **characterized by** perceptibly reproducing a corresponding reproducible signal included, or referred to, in a data field (103), associated with the link field, comprised in the trigger data upon reception of said trigger data and invoking said information page in response to a predetermined user-operable command acting on the reproduced signal.

8. A method as claimed in claim 7, wherein the reproducible signal is a displayable video sub-image, comprising the step of displaying said sub-image within the image area representing the television program.

9. A method as claimed in claim 7, comprising the step of receiving and storing a table of contents identifying the trigger data transmitted during the program, displaying said table of contents and invoking stored information pages in response to selecting respective trigger data from said table of contents.

10. A transmitter (1) for transmitting television programs (TV) to at least one receiver, comprising means (12) for transmitting, along with a television signal representing a program, additional information pages (W) related to said television programs and means (13) for further transmitting, during a program, trigger data (T) comprising a, link field (104) identifying a particular one of said additional information pages for selectively invoking said particular one of said additional pages, **characterized in that** the trigger data comprises, associated with the link field, a data field (103) including, or referring to, a corresponding reproducible signal for perceptible reproduction by the receiver so that, in response to a predetermined user-operable command acting on the reproducible signal, said information page is invokable.

11. A transmitter as claimed in claim 10, further comprising means for transmitting a table of contents identifying the trigger data transmitted during the program.

12. A receiver (2) for receiving television programs (TV), comprising means for receiving and storing additional information pages (W) related to said television programs and transmitted along with a television signal representing a program, and for further receiving, during a program, trigger data (T) comprising a link field (104) identifying a particular one of said additional information pages for selectively invoking said particular one of said additional information pages, **characterized by** means for perceptibly reproducing a corresponding reproducible signal included, or referred to, in a data field (103), associated with the link field, comprised in the trigger data upon reception of said trigger data and invoking said information page in response to a predetermined user-operable command acting on the reproduced signal.

13. A receiver as claimed in claim 12, wherein the reproducible signal is a displayable video sub-image, comprising means for displaying said sub-image within the image area representing the television program.

14. A receiver as claimed in claim 12, comprising means for receiving and storing a table of contents identifying the trigger data transmitted during the program, displaying said table of contents and invoking stored information pages in response to selecting respective trigger data from said table of contents.

15. A television signal representing a television program and including additional information pages (W) related to said television program and trigger data (T) comprising a link field (104) identifying a particular one of said additional information pages for selectively invoking said particular one of additional information pages, **characterized in that** the trigger data further comprises, associated with the link field, a data field (103) including, or referring to, a corresponding reproducible signal for perceptible reproduction by the receiver so that, in response to a predetermined user-operable command acting on the reproducible signal, said information page is invokable.

16. A signal as claimed in claim 15, further including a table of contents
identifying the trigger data transmitted during the program.

17. A storage medium on which a television signal as claimed in claim 15 or 16 is stored.

## Patentansprüche

1. Verfahren zum Übertragen von Fernsehprogrammen (TV) zu wenigstens einem Empfänger, wobei das Verfahren die nachfolgenden Verfahrensschritte umfasst: das zusammen mit einem ein Programm darstellenden Fernsehsignal Übertragen zusätzlicher Informationsseiten (W) in Bezug auf die genannten Fernsehprogramme, und weiterhin das während eines Programms Übertragen von Triggerdaten (T) mit einem Koppelfeld (104), das eine spezielle Seite der genannten zusätzlichen Informationsseiten identifiziert, und zwar zum selektiven Aufrufen der genannten speziellen Seite der genannten zusätzlichen Informationsseiten, **dadurch gekennzeichnet, dass** die Triggerdaten weiterhin ein mit dem Koppelfeld assoziierte Datenfeld (103) enthalten, das ein entsprechendes reproduzierbares Signal enthält oder Bezug darauf nimmt, und zwar zur wahrnehmbaren Wiedergabe durch den Empfänger, so dass in Reaktion auf einen vorbestimmten vom Benutzer durchführbaren Befehl, der auf das reproduzierbare Signal wirkt, die genannte Informationsseite aufrufbar ist.

2. Verfahren nach Anspruch 1, wobei das reproduzierbare Signal ein wiedergebbares Video-Teilbild ist.

3. Verfahren nach Anspruch 1, wobei das wiedergebbare Signal ein hörbares Tonsignal ist.

4. Verfahren nach Anspruch 1, das weiterhin den nachfolgenden Verfahrensschritt umfasst: das Übertragen einer Inhaltsübersicht (TOC), welche die während des Programms übertragenen Triggerdaten Identifiziert.

5. Verfahren nach Anspruch 4, wobei die Inhaltsübersicht während des ganzen Fernsehprogramms wiederholt übertragen wird.

6. Verfahren nach Anspruch 4, mit dem nachfolgenden Verfahrensschritt: das Übertragen von Triggerdaten zum Aufrufen der genannten Inhaltsübersicht.

7. Verfahren zum Empfangen von Fernsehprogrammen, wobei das Verfahren die nachfolgenden Verfahrensschritte umfasst: das Empfangen und Speichern zusätzlicher Informationsseiten (W) in Bezug auf die genannten Fernsehprogramme und zusammen mit einem ein Programm darstellenden Fernsehsignal übertragen, und weiterhin das während eines Programms Empfangen von Triggerdaten (T) mit einem Koppelfeld (104), das eine spezielle Seite der genannten zusätzlichen Informationsseiten identifiziert, und zwar zum selektiven Aufrufen der genannten speziellen Seite der genannten zusätzlichen Informationsseiten, **gekennzeichnet durch** wahrnehmbares Wiedergeben eines in ein Datenfeld (103) eingeschlossenen oder darauf Bezug nehmenden wiedergebbaren mit dem Koppelfeld assoziierten Signals, das bei Empfang der genannten Triggerdaten in den Triggerdaten anwesend ist, und **durch** das Aufrufen der genannten Informationsseite in Reaktion auf einen vorbestimmten vom Benutzer durchführbaren Befehl, der auf das wiedergebbare Signal wirkt.

8. Verfahren nach Anspruch 7, wobei das reproduzierbare Signal ein wiedergebbares Video-Teilbild ist, wobei das Verfahren den nachfolgenden Verfahrensschritt umfasst: das Wiedergeben des genannten Teilbildes innerhalb des Bildbereichs, der das Fernsehprogramm darstellt.

9. Verfahren nach Anspruch 7, mit dem Verfahrensschritt des Empfangs und der Speicherung einer Inhaltsübersicht, welche die während des Programms übertragenen Triggerdaten identifiziert, dem Schritt der Wiedergabe der genannten Inhaltsübersicht und dem Schritt des Aufrufs der gespeicherten Informationsseiten, und zwar in Reaktion auf das Selektieren der betreffenden Triggerdaten aus der genannten Inhaltsübersicht.

10. Sender (1) zum Übertragen von Fernsehprogrammen (TV) zu wenigstens einem Empfänger mit Mitteln (12) zum zusammen mit einem ein Programm darstellenden Fernsehsignal Übertragen zusätzlicher, sich auf das genannte Fernsehprogramm beziehender Informationsseiten (W) und mit Mitteln (13) zum während eines Programms weiteren Übertragen von Triggersignalen (T) mit einem eine spezielle Seite der genannten zusätzlichen Informationsseiten identifizierenden Koppelfeld (104) zum selektiven Aufrufen der genannten speziellen Seite der genannten zusätzlichen Seiten, **dadurch gekennzeichnet, dass** die Triggerdaten Folgendes enthalten: assoziiert mit dem Koppelfeld ein Datenfeld (103) das ein entsprechendes reproduzierbares Signal enthält oder Bezug darauf nimmt, zur wahrnehmbaren Wiedergabe durch den Empfänger, so dass in Reaktion auf einen vorbestimmten vom Benutzer durchführbaren Befehl, der auf das wiedergebbare Signal wirkt, die genannte Informationsseite aufgerufen werden kann.

11. Sender nach Anspruch 10, der weiterhin Mittel zum Übertragen einer Inhaltsübersicht enthält, welche die während des Programms übertragenen Triggerdaten identifiziert.

12. Empfänger (2) zum Empfangen von Fernsehprogrammen (TV) mit Mitteln zum Empfangen und Speichern zusätzlicher Informationsseiten (W) die sich auf die genannten Fernsehprogramme beziehen und die gleichzeitig mit einem ein Programm darstellenden Fernsehsignal übertragen werden, und zum während eines Programms weiteren Empfangen von Triggerdaten (T) mit einem Koppelfeld (104), das eine spezielle Seite der genannten zusätzlichen Informationsseiten identifiziert zum selektiven Aufrufen der genannten speziellen Seite der genannten zusätzlichen Informationsseiten, **gekennzeichnet durch** Mittel zur wahrnehmbaren Wiedergabe eines in ein Datenfeld (103) eingeschlossenen oder sich darauf beziehenden entsprechenden wiedergebbaren Signal, die mit dem Koppelfeld in den Triggerdaten bei Empfang der genannten Triggerdaten assoziiert sind und in Reaktion auf einen vorbestimmten vom Benutzer durchzuführenden auf das wiedergegebene Signal wirkenden Befehl die genannte Informationsseite aufrufen.

13. Empfänger nach Anspruch 12, wobei das reproduzierbare Signal ein wiedergebbares Video-Teilbild ist mit Mitteln zum Wiedergeben des genannten Teilbildes innerhalb des das Fernsehprogramm darstellenden Bildbereichs.

14. Empfänger nach Anspruch 12, mit Mitteln zum Empfangen und Speichern einer Inhaltsübersicht, welche die während des Programms übertragenen Triggerdaten identifiziert, zum Wiedergeben der genannten Inhaltsübersicht und zum Aufrufen gespeicherter Informationsseiten, und zwar in Reaktion auf das Selektieren betreffender Triggerdaten aus der genannten Inhaltsübersicht.

15. Fernsehsignal, das ein Fernsehprogramm darstellt und zusätzliche Informationsseiten (W) in Bezug auf das genannte Fernsehprogramm enthält sowie Triggerdaten (T) mit einem Koppelfeld (104), das eine spezielle Seite der genannten zusätzlichen Informationsseiten identifiziert zum selektiven Aufrufen der genannten speziellen Seite der zusätzlichen Informationsseiten, **dadurch gekennzeichnet, dass** die Triggerdaten weiterhin assoziiert mit dem Koppelfeld ein Datenfeld (103) mit einem entsprechenden oder sich darauf beziehenden wiedergebbaren Signal enthalten, und zwar zur wahrnehmbaren Wiedergabe durch den Empfänger, so dass in Reaktion auf einen vorbestimmten vom Benutzer durchführbaren auf das wiedergebbare Signal wirkenden Befehl die genannte Informationsseite aufgerufen werden kann.

16. Signal nach Anspruch 15, weiterhin mit einer Inhaltsübersicht, welche die während des Programms übertragenen Triggerdaten identifiziert.

17. Speichermedium, auf dem ein Fernsehsignal nach Anspruch 15 oder 16 gespeichert ist.

## Revendications

1. Procédé de transmission de programmes de télévision (TV) à au moins un récepteur, comprenant les étapes suivantes consistant à transmettre, concurremment avec un signal de télévision qui représente un programme, des pages d'information additionnelles (W) qui se rapportent audits programmes de télévision et à transmettre en outre, au cours d'un programme, des données de déclenchement (T) comprenant un champ de liens (104) qui identifie une page particulière desdites pages d'information additionnelles pour invoquer sélectivement ladite page particulière desdites pages d'information additionnelles, **caractérisé en ce que** les données de déclenchement comprennent en outre, associé au champ de liens, un champ de données (103) comprenant ou se référant à un signal reproductible correspondant pour une reproduction perceptible par le récepteur, de sorte que, en réponse à une instruction prédéterminée praticable par l'utilisateur agissant sur le signal reproductible, ladite page d'information est susceptible d'invocation.

2. Procédé selon la revendication 1, dans lequel le signal reproductible est une sous-image vidéo affichable.

3. Procédé selon la revendication 1, dans lequel le signal reproductible est un signal sonore audible.

4. Procédé selon la revendication 1, comprenant en outre l'étape suivante consistant à transmettre une table des matières (TOC) identifiant les données de déclenchement qui sont transmises au cours du programme.

5. Procédé selon la revendication 4, dans lequel la table des matières est transmise répétitivement pendant tout le programme de télévision.

6. Procédé selon la revendication 4, comprenant l'étape suivante consistant à transmettre des données de déclenchement pour invoquer ladite table des matières.

7. Procédé de réception de programmes de télévision, comprenant les étapes suivantes consistant à recevoir et à stocker des pages d'information additionnelles (W) qui se rapportent audits programmes de télévision et qui sont transmises concurremment avec un signal de télévision représentant un programme, et à recevoir en outre, au cours d'un programme, des données de déclenchement (T) comprenant un champ de liens (104) qui identifie une page particulière desdites pages d'information additionnelles pour invoquer sélectivement ladite page particulière desdites pages d'information additionnelles, **caractérisé par** une reproduction perceptible d'un signal reproductible correspondant étant inclus ou indiqué dans un champ de données (103) qui est connexe au champ de liens, compris dans les données de déclenchement à la réception desdites données de déclenchement et par l'invocation de ladite page d'information en réponse à une instruction prédéterminée praticable par l'utilisateur agissant sur le signal reproduit.

8. Procédé selon la revendication 7, dans lequel le signal reproductible est une sous-image vidéo affichable, comprenant l'étape suivante consistant à afficher ladite sous-image dans la zone d'image qui représente le programme de télévision.

9. Procédé selon la revendication 7, comprenant l'étape suivante consistant à recevoir et à stocker une table des matières identifiant les données de déclenchement qui sont transmises au cours du programme, à afficher ladite table des matières et à invoquer des pages d'information stockées en réponse à la sélection de données de déclenchement respectives en provenance de ladite table des matières.

10. Emetteur (1) de transmission de programmes de télévision (TV) à au moins un récepteur, comprenant des moyens (12) pour transmettre, concurremment avec un signal de télévision qui représente un programme, des pages d'information additionnelles (W) qui se rapportent audits programmes de télévision et des moyens (13) pour transmettre en outre, au cours d'un programme, des données de déclenchement (T) comprenant un champ de liens (104) qui identifie une page particulière desdites pages d'information additionnelles pour invoquer sélectivement ladite page particulière desdites pages d'information additionnelles, **caractérisé en ce que** les données de déclenchement comprennent en outre, associé au champ de liens, un champ de données (103) comprenant ou se référant à un signal reproductible correspondant pour une reproduction perceptible par le récepteur, de sorte que, en réponse à une instruction prédéterminée praticable par l'utilisateur agissant sur le signal reproductible, ladite page d'information est susceptible d'invocation.

11. Emetteur selon la revendication 10, comprenant en outre des moyens pour transmettre une table des matières identifiant les données de déclenchement qui sont transmises au cours du programme.

12. Récepteur (2) pour recevoir des programmes de télévision (TV), comprenant des moyens pour recevoir et pour stocker des pages d'information additionnelles (W) qui se rapportent audits programmes de télévision et qui sont transmises concurremment avec un signal de télévision représentant un programme, et pour recevoir en outre, au cours d'un programme, des données de déclenchement (T) comprenant un champ de liens (104) qui identifie une page particulière desdites pages d'information additionnelles pour invoquer sélectivement ladite page particulière desdites pages d'information additionnelles, **caractérisé par** des moyens pour reproduire perceptiblement un signal reproductible correspondant étant inclus ou indiqué dans un champ de données (103) qui est connexe au champ de liens, compris dans les données de déclenchement à la réception desdites données de déclenchement et pour invoquer ladite page d'information en réponse à une instruction prédéterminée praticable par l'utilisateur agissant sur le signal reproduit.

13. Récepteur selon la revendication 12, dans lequel le signal reproductible est une sous-image vidéo affichable, comprenant des moyens pour afficher ladite sous-image dans la zone d'image qui représente le programme de télévision.

14. Récepteur selon la revendication 12, comprenant des moyens pour recevoir et pour stocker une table des matières identifiant les données de déclenchement qui sont transmises au cours du programme, pour afficher ladite table des matières et pour invoquer des pages d'information stockées en réponse à la sélection de données de déclenchement respectives en provenance de ladite table des matières.

15. Signal de télévision représentant un programme de télévision et comprenant des pages d'information additionnelles (W) qui se rapportent audit programme de télévision et des données de déclenchement (T) comprenant un champ de liens (104) qui identifie une page particulière desdites pages d'information additionnelles pour invoquer sélectivement ladite page particulière desdites pages d'information additionnelles, **caractérisé en ce que** les données de déclenchement comprennent en outre, associé au champ de liens, un champ de données (103) comprenant ou se référant à un signal reproductible correspondant pour une reproduction perceptible par le récepteur, de sorte que, en réponse à une instruction prédéterminée praticable par l'utilisateur agissant sur le signal reproductible, ladite page d'information est susceptible d'invocation.

16. Signal selon la revendication 15, comprenant en outre une table des matières identifiant les données de déclenchement qui sont transmises au cours du programme.

17. Support de stockage sur lequel un signal de télévision selon la revendication 15 ou selon la revendication 16 est stocké.
